# EUROPEAN PATENT APPLICATION

(11) **EP 3 011 928 A1**
(43) Date of publication of application: **27.04.2016**
(21) Application number: 15190824.1
(22) Date of filing: 21.10.2015
(51) Int. Cl.: A61C 8/00, A61C 13/265

(54) **DENTAL FIXATION DEVICE**

(30) Priority: 22.10.2014 ES 201431555
(71) Applicant: Createch Medical, S.L., 20850 Mendaro (Guipuzcoa) (ES)
(72) Inventor: URZAINQUI BERISTAIN, Rubén, 20850 MENDARO (Guipúzcoa) (ES)
(74) Representative: Ungria López, Javier

(57) **Abstract**

Dental fixation device for dental prostheses which comprises an elastic fixation element with shape memory (5) fixed to the dental prosthesis, where by means of the activation of the elastic fixation element with shape memory (5) by means of an external activator agent, a change of geometry of said elastic fixation element with shape memory (5) is produced which in turn causes a retaining of the dental prosthesis on the dental implant (1), where the retaining of the dental prosthesis on the dental implant (1) is maintained until a new external activator/deactivator agent causes a deactivation of the elastic fixation element with shape memory (5), said elastic fixation element with shape memory (5) modifying its geometry, releasing the dental prosthesis for the removal thereof from the mouth of the user.

## Description

### OBJECT OF THE INVENTION

The present invention relates to a dental fixation device for dental prostheses, configured from an intelligent material with shape memory which allows firm securing of the prosthesis to the dental implant, at the same time as it allows simple insertion and removal.

It is applicable in the industry dedicated to the manufacture and implantation of dental prostheses.

### TECHNICAL PROBLEM TO BE RESOLVED AND BACKGROUND OF THE INVENTION

At present, dental prostheses are classified into two large groups: fixed prostheses and removable prostheses.

The fixed prostheses are obtained by means of fixing screws or dental cement such that the patient cannot remove it and it is only the doctor or dentist who can do this.

On the other hand, the removable prostheses are fixed by means of anchors such that the patient can remove the prosthesis.

The fixed prosthesis has the advantage of being more similar to natural teeth (which are not removable), however it has the big drawback of the limited hygiene thereof.

On the other hand, the removable prosthesis has the advantage of allowing perfect access for oral hygiene and the cleaning of the prosthesis, however it has the drawback of producing, in the patient, a certain feeling of mobility and instability of the prosthesis, with the consequent lack of comfort which this involves.

The use of anchors in the scope of implant-supported dental prostheses, relating to removable prostheses installed on fixed implants, has been very frequent in recent years, being used to retain the prosthesis on the implant in a removable manner.

The implant is fixed to the bone of the patient by means of osteointegration, acting as the artificial support on which the mechanism, which integrates into the dental prosthesis which is going to be inserted, is fixed.

The anchor is usually composed of three pieces: one male threaded component; one female component, and; one retaining element with certain mechanical elasticity.

In the prior art, there are different types of anchor with various retaining forms, where the most common are the following:
- Spherical form: ball type male metallic anchor and hemispherical female of Teflon or similar;
- Cylindrical form: cylindrical type male metallic anchor and cylindrical female "piggyback type";
- Toroidal form: toroidal type male metallic anchor and female of the same form, "locator type".

These types of anchors are based on the elasticity of the retaining element. Plastic or metallic type materials are usually used, however, always with an elastic capacity to change the geometry thereof and return to the same. Geometries and designs are also usually used which favor the development of the elastic capacity of the retaining element. Minimum thicknesses are also used which favor the cited elastic function.

However, the anchors, which are provided at present, do not resolve the big drawback which removable prostheses in general present and it is the feeling of discomfort and mobility which they cause the user of the prosthesis.

The anchors, which are provided at present, provide reduced stability for the prosthesis and on occasion are not even capable of adequately retaining the prosthesis.

The dental fixation device, which is described below, offers suitable solutions to the problems previously mentioned and unresolved in the prior art.

### DESCRIPTION OF THE INVENTION

The object of the present invention is based on a dental fixation device for dental prostheses; the configuration and design thereof allow the fixing between the prosthesis and the implant by means of the use of an intelligent material with shape memory.

Said intelligent material with shape memory allows the shape of said material to be preserved in at least two different configurations or geometries (being able to thus talk about "double shape memory").

The cited intelligent material modifies its geometry only by means of the action of an external activator agent such as the cold, heat, an applied electric voltage, a light beam or others. When it modifies its geometry, it carries out a mechanical locking function of the dental prosthesis to the implant.

Said locking is typically carried out with the intermediation of other elements of the dental fixation device, typically at least one female element, in which is inserted the intelligent material mentioned and a male element.

According to a preferred embodiment of the invention, the female element is fixed to the dental prosthesis and the male element is anchored to the dental implant, typically by way of a screw.

The dental fixation device for dental prostheses, which is presented, comprises a dental implant which is introduced in a permanent manner in the bone of the jaw of a dental prosthesis user.

The dental fixation device comprises an elastic fixation element with shape memory (composed of the mentioned intelligent material with shape memory) fixed to the dental prosthesis.

The activation of the elastic fixation element with shape memory, carried out by means of an external activator/deactivator agent, produces a any combination of the following effects:
∘ a change of geometry of said elastic fixation element with shape memory;
∘ a hardening of said elastic fixation element with shape memory;
∘ an increase of the pressure exerted by said elastic fixation element with shape memory on the dental fixation device.

The activation of said elastic fixation element with shape memory produces a retaining of the dental prosthesis on the dental implant.

The deactivation of the elastic fixation element with shape memory, carried out by means of an external activator/deactivator agent, produces any combination of the following effects:
∘ a change of geometry of said elastic fixation element with shape memory;
∘ a softening of said elastic fixation element with shape memory;
∘ a reduction of the pressure exerted by said elastic fixation element with shape memory on the dental fixation device.

The deactivation of said elastic fixation element with shape memory produces the release of the dental prosthesis with respect to the dental implant, allowing the removal of the dental prosthesis from the mouth of the user.

In this way, by means of the actuation of an external activator/deactivator agent, the dental prosthesis is retained on the dental implant until a new external activator/deactivator agent produces a deactivation of the elastic fixation element with shape memory, releasing the dental prosthesis for the removal thereof from the mouth of the user.

As has already been mentioned, the dental fixation device preferably comprises a female element which houses, in the interior thereof, the elastic fixation element with shape memory, where said female element is adhered to the dental prosthesis by means of interlocking, by means of friction by means of a coarse surface or by means of adhesives (including cementing, resinning or other methods).

The female element comprises, according to a possible embodiment, holes which leave part of the elastic fixation element with shape memory uncovered to allow the activation of said elastic fixation element with shape memory by means of direct contact with an external activator agent.

Similarly, as has already been mentioned, the dental fixation device preferably comprises at least one male element which is fixed to the dental implant, where the retaining of the dental prosthesis on the dental implant is produced by retaining the elastic fixation element with shape memory against said female element and male element.

In turn, the retaining of the mentioned male element on the dental implant is typically carried out by means of a screw introduced in the interior of a bore made internally in the male element, and screwed to the implant. Said screw is preferably of the self- tapping type such that it makes possible the anchoring of the male element to practically any type of implant introduced in a fixed manner in the jaw of a dental prosthesis user.

According to a possible embodiment of the dental fixation device, the male element comprises a perimeter depression, in which is inserted the elastic fixation element with shape memory following the activation thereof.

According to a possible embodiment of the dental fixation device, the elastic fixation element with shape memory comprises a geometry in the form of a truncated ring, the length thereof encompasses approximately three quarters turn.

The elastic fixation element with shape memory typically comprises a cross section whose geometry comprises an internal angle with an edge penetrating towards the interior of the dental fixation device. Said edge, following the activation of the elastic fixation element with shape memory, penetrates in the interior of the perimeter depression of the male element (in those embodiments in which the male element comprises said perimeter depression).

Alternatively, the elastic fixation element with shape memory can comprise a toroidal geometry with a cross section whose geometry can be circular, rectangular, square section or others (or a combination of the foregoing) and penetrating towards the interior of the mentioned perimeter depression of the male element.

The mentioned female element comprises, according to one of the possible embodiments thereof, an internal annular depression in which is positioned the elastic fixation element with shape memory, in the embodiment in which said elastic fixation element with shape memory comprises an annular geometry.

Alternatively, according to another possible embodiment of the present dental fixation device for dental prostheses, the elastic fixation element with shape memory comprises a geometry in the form of a disc with a lower cylindrical projection, where said cylindrical projection comprises at least one groove which passes through it diametrically.

In this embodiment, the elastic fixation element with shape memory and with a disc shape is inserted into the bottom of the female element and the cylindrical projection thereof is inserted into a hole of the male element.

According to a possible embodiment, the external activator/deactivator agent activates/deactivates the elastic fixation element with shape memory from the exterior of the dental fixation device, whether physically contacting said dental fixation device from the exterior or creating a field which interacts from the exterior with the elastic fixation element with shape memory.

The external activator/deactivator agent comprises means selected from any combination of:
∘ a magnetic field;
∘ an electric field;
∘ an electromagnetic field;
∘ at least one contact terminal, at a determined temperature, which allows the activation/deactivation of the elastic fixation element with shape memory by heat transmission;
∘ at least one contact terminal, at a determined electric voltage, which allows the activation/deactivation of the elastic fixation element with shape memory by electric contact;
∘ at least one light source, which produces the activation/deactivation of the elastic fixation element with shape memory by lighting said elastic fixation element with shape memory.

### BRIEF DESCRIPTION OF THE FIGURES

As part of the explanation of the embodiment of the invention, a series of figures have been included, the explanation thereof is the following:
Figure 1: shows a sectional view of a first embodiment of the dental fixation device.
Figure 2: shows a sectional perspective view (according to the AA section indicated in figure 1) of the first embodiment of the dental fixation device.
Figure 3: shows a sectional view of a second embodiment of the dental fixation device.
Figure 4: shows an exploded perspective view of the second embodiment of the dental fixation device.

### DETAILED DESCRIPTION

The present invention relates, as has already been previously mentioned, to a dental fixation device for dental prostheses.

The elements which compose the dental fixation device are: an implant (1), a male fixation element (2), a screw (4) for the anchoring of the male element (2) to the implant (1), a female fixation element (3) of the prosthesis, and an elastic fixation element with shape memory (5).

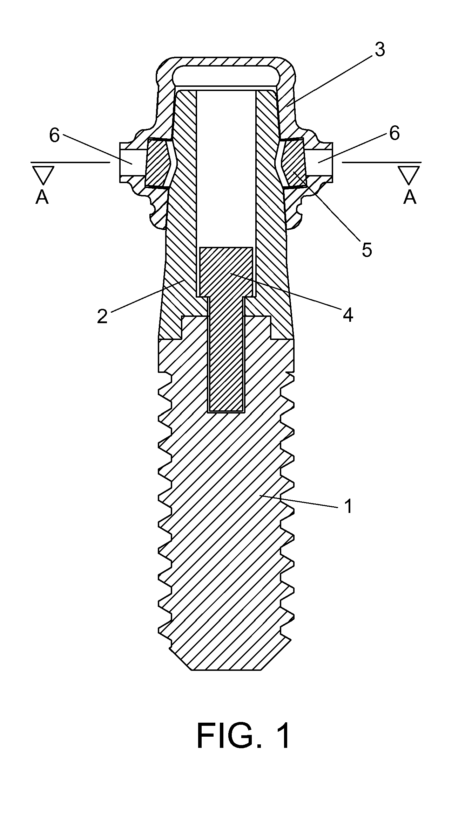

Said elements are common to the two embodiments proposed, shown in the figures 1 to 4. Both embodiments are distinguished in the geometry of the elements which form them and in the form of actuation of the elastic fixation element with shape memory (5).

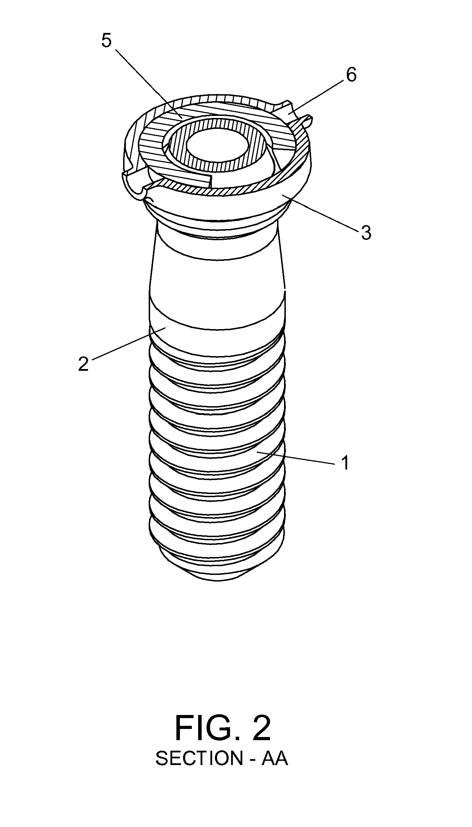

Figures 1 and 2 show the first proposed embodiment of the invention. It is observed that the male element (2) is fixed to the implant (1) by means of a screw (4) which is introduced in a bore made in the interior of said male element (2).

In addition, the female element (3) clamps and caps the male element (2) at the top. The elastic fixation element with shape memory (5) is located inserted in an internal annular depression of the female element (3), which matches a corresponding external annular protuberance of said female element (3).

According to the first proposed embodiment, the female element (3) comprises two holes (6) made on the external annular protuberance which are through holes to the internal annular depression such that they put the elastic fixation element with shape memory (5) in contact with the exterior of the dental fixation device.

The elastic fixation element with shape memory (5) comprises a geometry in the form of a truncated ring, of approximately three quarters turn in length and is positioned in the interior of the internal annular depression of the female element (3) such that the holes (6) do not match the truncation area of said elastic fixation element with shape memory (5).

The geometry of the section of said elastic fixation element with shape memory (5) comprises an internal perimeter angle with an edge penetrating towards the interior of the dental fixation device, said angle matching the angle of a perimeter depression made on the exterior of the male element (2).

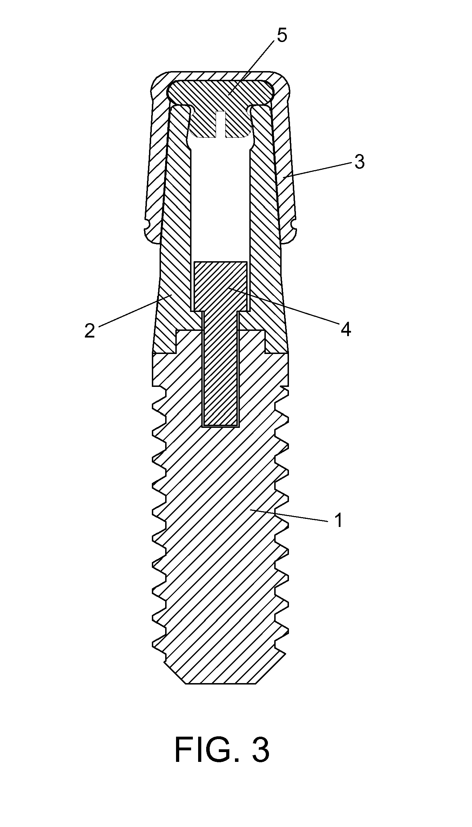

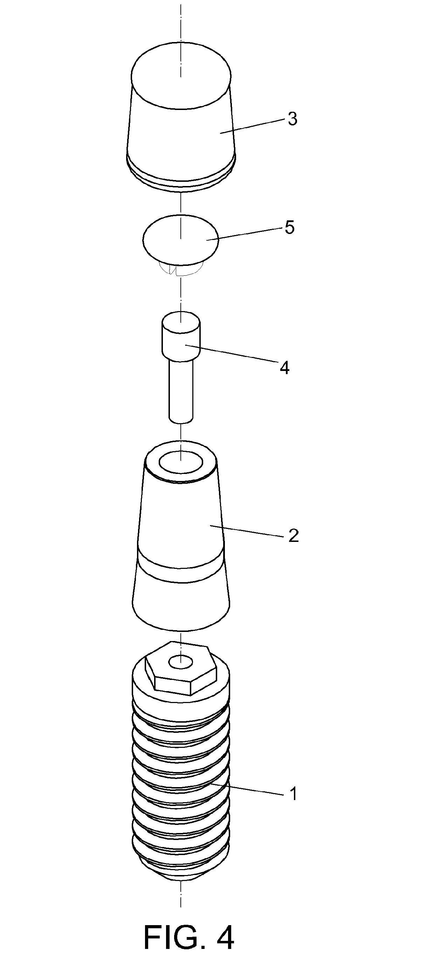

According to the second proposed embodiment of the dental fixation device, shown in the figures 3 and 4, it is observed that the elastic fixation element with shape memory (5) has the form of a disc with a cylindrical projection on the lower face thereof, said cylindrical projection comprising at least one groove which passes through it diametrically.

In this second embodiment, the female element (3) does not comprise an external annular protuberance or an internal annular depression. On the contrary, the elastic fixation element with shape memory (5) is inserted internally into the bottom of the female element (3).

When said female element (3) caps the male element (2) at the top, the grooved cylindrical projection of the elastic fixation element with shape memory (5) is inserted into a hole of the male element (2).

The functioning of the elastic fixation of the invention is explained below.

The elastic fixation element with shape memory (5) has the property of modifying its geometry in the presence of an external activation agent, which can be an electromagnetic field, an electric potential differential applied between two points of the elastic fixation element with shape memory (5), physical contact with a material at a temperature such that it causes the activation and modification of the geometry of the elastic fixation element with shape memory (5), an electronic circuit embedded and custom-designed which causes the activation and modification of the geometry of the elastic fixation element with shape memory (5) when faced with an external electric contact or the presence of an external electric or electromagnetic field, etc.

The elastic fixation element with shape memory (5) allows the shape of said element to be maintained in at least two different configurations or geometries (being able to then talk of "double shape memory"), its geometry being modified only following the activation/deactivation of said elastic fixation element with shape memory (5) by means of an external activation agent.

In the first embodiment of the dental fixation device proposed, the activation and deactivation of the elastic fixation element with shape memory (5) is produced by way of the holes (6) of the female element (3).

According to a preferred embodiment of said first embodiment, an electric potential differential is applied between two electric terminals which enter into contact with the elastic fixation element with shape memory (5) respectively by way of each one of the mentioned holes (6). The deactivation of the elastic fixation element with shape memory (5) is preferably produced by means of the application of said terminals with a polarity opposed to that which produces the activation thereof.

According to a first alternative embodiment of said first embodiment, an electric or electromagnetic field is applied by means of two terminals which approximate or enter into contact with the elastic fixation element with shape memory (5) respectively by means of the mentioned holes (6). The deactivation of the elastic fixation element with shape memory (5) is preferably produced by means of the application of said terminals with a polarity opposed to that which produces the activation thereof.

According to a second alternative embodiment of said first embodiment of the dental fixation device, the activation of the elastic fixation element with shape memory (5) is produced by the contact with said elastic fixation element with shape memory (5), by way of at least one of said holes (6), of at least one terminal at a determined temperature different to the temperature at which the elastic fixation element with shape memory (5) is found. In this case, for the deactivation of the elastic fixation element with shape memory (5), the same applies for the activation thereof.

According to a third alternative embodiment of the first embodiment of the dental fixation device, the female element (3) does not comprise the mentioned holes (6) in the external annular protuberance thereof, such that the activation/deactivation of the elastic fixation element with shape memory (5) is produced without direct contact of the external activation agent with said elastic fixation element with shape memory (5). In this case, the external activation agent can be an electric or electromagnetic field applied in proximity to the female element (3) or at least one terminal in contact with the female element (3), said terminal being at a determined temperature or electric voltage, said temperature or electric voltage being transmitted to the elastic fixation element with shape memory (5) by way of the female element (3).

When the elastic fixation element with shape memory (5) is activated, it modifies its geometry in a permanent manner until it is deactivated, reducing the internal diameter thereof and being adjusted to the male element (2), encapsulating it, at the same time remaining inserted in the internal annular depression of the female element (3).

Alternatively to that mentioned in the previous paragraph, there is the possibility of the elastic fixation element with shape memory (5) being inserted without clearance between the female element (3) and the male element (2), from the outset, already in the deactivated state of the same. In this case, following the activation of the elastic fixation element with shape memory (5), the modification of the geometry of said elastic fixation element with shape memory (5) is not produced, due to the fact that the relative arrangement of the different elements does not allow said modification of geometry. Therefore, the activation of the elastic fixation element with shape memory produces an increase in the pressure on the male element (2) and the female element (3), due to the tendency of elastic fixation element with shape memory (5) to modify its geometry, a modification which, as has been mentioned, is prevented by the geometric arrangement without relative clearance between the male element (2), the elastic fixation element with shape memory (5) and the female element (3). The mentioned increase of pressure exerted by the elastic fixation element with shape memory (5) produces the retaining of the female element (3) on the male element (2) of the dental fixation device.

Given that said female element (3) is in turn inserted into the dental prosthesis, gripping said prosthesis by way of a coarse or knurled exterior surface of the female element (3), the male element (2) and the female element (3) are retained to each other by means of the elastic fixation element with shape memory (5) when the activation of said elastic fixation element with shape memory (5) is produced, the dental prosthesis therefore remaining well fixed to the implant (1).

In the second embodiment of the dental fixation device shown in figures 3 and 4, the elastic fixation element with shape memory (5) does not provide any contact surface with the exterior of the dental fixation device.

Therefore the elastic fixation element with shape memory (5) is preferably activated by means of the application of an electric or electromagnetic field, and is deactivated by means of the application of another electric or electromagnetic field of polarity opposed to the field which produces the activation thereof.

However, also in the second dental embodiment, the elastic fixation element with shape memory (5) could provide at least one contact surface with the exterior (not shown in figures 3 and 4), by way of holes in the female element (3), as occurs in the first embodiment proposed for the dental fixation device.

As has already been mentioned, the activation and deactivation of the elastic fixation element with shape memory (5) in any of the two embodiments proposed of the dental fixation device can be produced by means of an electronic circuit embedded in said elastic fixation element with shape memory (5), a circuit which would be activated by means of electric contact with exterior terminals or by means of the application of an electric or electromagnetic field.

Furthermore, there is also the possibility of activating the elastic fixation element with shape memory (5) by means of the application of luminous radiation in any spectrum, whether white, ultraviolet light etc.

In the second embodiment of the dental fixation device, when the activation of the elastic fixation element with shape memory (5) is produced, the latter modifies its geometry such that the grooved cylindrical projection presses against the surface of the male element (2), the female element (3) being retained against the male element (2) such that the prosthesis, which is retained against the female element (3) by the coarse or knurled surface of said female element (3), is in turn retained on the male element (2) and consequently on the implant (1).

Alternatively, as has been mentioned for the first embodiment proposed for the dental fixation device, there is the possibility that in this second embodiment the elastic fixation element with shape memory (5) is inserted without clearance between the female element (3) and the male element (2) already at the outset. In this case, the modification of the geometry of the elastic fixation element with shape memory (5) is prevented by said relative geometric arrangement without clearance between the male element (2), the elastic fixation element with shape memory (5) and the female element (3). Therefore, the activation of the elastic fixation element with shape memory (5) produces an increase to the pressure of the same on the male element (2) and the female element (3), due to the tendency thereof to modify its geometry (a modification which, as has been explained, is not produced in the case of this relative arrangement without clearance). Said increase of pressure produced following the activation of the elastic fixation element with shape memory (5) allows the retaining of the female element (3) on the male element (2) and therefore the correct fixation of the prosthesis.

In the mentioned cases in which the elastic fixation element with shape memory (5) is inserted without clearance between the female element (3) and the male element (2), the elastic fixation element with shape memory (5) changes its consistency following the activation thereof, going from being soft to being harder. On the contrary, the deactivation of the elastic fixation element with shape memory (5) produces a change of consistency of the same, the latter going from being harder to being softer.

## Claims

1. A dental fixation device for dental prostheses which comprises a dental implant (1) which is introduced in a permanent manner into the bone of the jaw of a dental prosthesis user, **characterized in that** it comprises an elastic fixation element with shape memory (5) fixed to the dental prosthesis configured for retaining the dental prosthesis on the dental implant (1) upon being activated by an external activator/deactivator agent and for releasing the dental prosthesis with respect to the dental implant (1) upon being deactivated by an external activator/deactivator agent, allowing the removal of the dental prosthesis from the mouth of the user, where the activation/deactivation of the elastic fixation element with shape memory (5) by means of an external activator/deactivator agent produces any combination of:
∘ a change of geometry of said elastic fixation element with shape memory (5);
∘ a hardening/softening of said elastic fixation element with shape memory (5);
∘ an increase/decrease of the pressure exerted by said elastic fixation element with shape memory (5) on the dental fixation device.

2. The dental fixation device according to claim 1, **characterized in that** it comprises a female element (3), where said female element (3) is adhered to the dental prosthesis by means of interlocking, by means of friction by way of a coarse surface, or by means of adhesives.

3. The dental fixation device according to claim 2, **characterized in that** the female element (3) houses, in the interior thereof, the elastic fixation element with shape memory (5).

4. The dental fixation device according to claim 3, **characterized in that** the female element (3) comprises holes (6) which leave part of the elastic fixation element with shape memory (5) uncovered to allow the activation of said elastic fixation element with shape memory (5) by means of direct contact with an external activator agent.

5. The dental fixation device according to claim 1, **characterized in that** it comprises a male element (2) which is fixed to the dental implant (1).

6. The dental fixation device according to claims 3 and 5, **characterized in that** the retaining of the dental prosthesis on the dental implant (1) is produced by retaining the elastic fixation element with shape memory (5), housed in the interior of the female element (3), against said male element (2) and said female element (3).

7. The dental fixation device according to claim 6, **characterized in that** the male element (2) comprises a perimeter depression in which is inserted the elastic fixation element with shape memory (5) following the activation thereof.

8. The dental fixation device according to claim 1, **characterized in that** the elastic fixation element with shape memory (5) comprises a geometry in the form of a truncated ring, the length thereof encompasses approximately three quarters turn.

9. The dental fixation device according to claim 7, **characterized in that** the elastic fixation element with shape memory (5) comprises a cross section, the geometry thereof comprises an internal angle with an edge penetrating into the interior of the perimeter depression, in which is inserted said elastic fixation element with shape memory (5) following the activation thereof.

10. The dental fixation device according to claim 7, **characterized in that** the elastic fixation element with shape memory (5) comprises a toroidal geometry penetrating into the interior of the perimeter depression in which is inserted said elastic fixation element with shape memory (5) and a cross section, the geometry thereof being selected from:
∘ circular;
∘ rectangular;
∘ a combination of the foregoing.

11. The dental fixation device according to claims 3 and 8, **characterized in that** the female element (3) comprises an internal annular depression in which is positioned the elastic fixation element with shape memory (5).

12. The dental fixation device according to claim 1, **characterized in that** the elastic fixation element with shape memory (5) comprises a geometry in the form of a disc with a lower cylindrical projection, where said cylindrical projection comprises at least one groove which passes through it diametrically.

13. The dental fixation device according to claims 6 and 12, **characterized in that** the elastic fixation element with shape memory (5) is inserted into the bottom of the female element (3) and the cylindrical projection thereof is inserted into a hole of the male element (2).

14. The dental fixation device according to claim 5, **characterized in that** it comprises a screw (4) of the self-tapping type which fixes the male element (2) to the dental implant (1).

15. The dental fixation device according to claim 1, **characterized in that** the external activator/deactivator agent activates/deactivates the elastic fixation element with shape memory (5) from the exterior of the dental fixation device.

16. The dental fixation device according to claim 1, **characterized in that** the external activator/deactivator agent comprises means selected from any combination of:
∘ a magnetic field;
∘ an electric field;
∘ an electromagnetic field;
∘ at least one contact terminal, at a determined temperature which allows the activation/deactivation of the elastic fixation element with shape memory (5) by heat transmission;
∘ at least one contact terminal, at a determined electric voltage which allows the activation/deactivation of the elastic fixation element with shape memory (5) by electric contact;
∘ at least one light source which produces the activation/deactivation of the elastic fixation element with shape memory (5) by illumination of said elastic fixation element with shape memory (5).
